# EUROPEAN PATENT SPECIFICATION

(11) **EP 2 505 819 B1**
(45) Date of publication and mention of the grant of the patent: **19.10.2016**
(21) Application number: 10842086.0
(22) Date of filing: 06.01.2010
(51) Int. Cl.: F02M 25/08

(54) **DEVICE FOR GUIDING VAPORIZED FUEL TO INTERNAL COMBUSTION ENGINE**
VORRICHTUNG ZUR LEITUNG VON VERDAMPFTEM KRAFTSTOFF AN VERBRENNUNGSMOTOR
DISPOSITIF POUR CONDUIRE UN CARBURANT VAPORISÉ VERS UN MOTEUR À COMBUSTION INTERNE

(43) Date of publication of application: 03.10.2012
(73) Proprietor: Honda Motor Co., Ltd., Minato-ku Tokyo 107-8556 (JP)
(72) Inventor: HIRAYAMA, Shuji, Wako-shi Saitama 351-0193 (JP); FUJIHARA, Kazuo, Wako-shi Saitama 351-0193 (JP); TAKIGAWA, Toshinao, Wako-shi Saitama 351-0193 (JP); IGARI, Takeo, Wako-shi Saitama 351-0193 (JP); INAOKA, Hiroshi, Wako-shi Saitama 351-0193 (JP)
(74) Representative: Ilgart, Jean-Christophe
(86) International application number: PCT/JP2010/050059
(87) International publication number: WO 2011/083569

(56) References cited:
- EP-A1- 2 540 602
- EP-A1- 2 644 489
- DE-A1- 1 942 963
- JP-A- 2001 140 720
- JP-A- 2005 061 305
- JP-U- H0 183 115
- JP-U- 49 088 172

## Description

### TECHNICAL FIELD

The present invention relates to an apparatus for guiding a vaporized fuel generated within a fuel tank into an engine oil collected in a crankcase of an internal combustion engine.

### BACKGROUND ART

A volatile component evaporates from a liquid fuel stored in a fuel tank. The evaporated fuel is called a vaporized fuel. The vaporized fuel is typically processed by adsorbing the vaporized fuel onto a canister and drawing the vaporized fuel from the canister into an internal combustion engine for combustion of the fuel. The canister includes a container and an active carbon or another absorbent packed into the container.

It is required that, instead of canisters which are often installed in vehicles, other smaller components be used for the purpose of downsizing the vehicles. For example, Patent Literature 1 below discloses that a container called an oil pan is provided separately from an engine, and a vaporized fuel is collected in this container.

Further, Patent Literature 2 discloses that a canister is omitted and a vaporized fuel is guided into an engine oil in a crankcase of an internal combustion engine.

Document DE 1 942 963 A1 describes an installation where fuel vapour is guided to an engine oil pan. The installation comprises a valve unit to which fluid lines are connected that lead to the tank, the oil pan and to the atmosphere.

However, a level of engine oil contained in a crankcase varies depending on a vehicle orientation and state, and hence it is necessary to prevent a vaporized fuel from being guided into a space defined above the engine oil level.

Further, the engine oil is pumped up by an oil pump and supplied to lubricate parts of an internal combustion engine. At this time, it is undesirable that the vaporized fuel is pumped directly into the oil pump. If the vaporized fuel in the form of bubbles in the engine oil is supplied to the parts of the engine, the fuel bubbles could adversely affect lubrication performance of the engine oil.

There is a need for an apparatus designed to guide a vaporized fuel into an engine oil collected in a crankcase to ensure that the vaporized fuel is reliably stored in the engine oil without being pumped up into an oil pump as the fuel is in a gas phase.

### Prior Art Literature

### Patent Document

Patent Document 1: Japanese Patent Laid-open No. 2001-140720
Patent Document 2: Japanese Patent Laid-open No. 2005-61305

### SUMMARY OF INVENTION

### Technical Problem

It is an object of the invention to provide an apparatus designed to guide a vaporized fuel into an engine oil collected in a crankcase to ensure that the vaporized fuel is reliably stored in the engine oil without being pumped up into an oil pump as the fuel is in a gas phase.

### Solution to Problem

This problem is solved by a vehicle according to claim 1.

According to the present invention, there is provided an apparatus for guiding a vaporized fuel generated in a fuel tank into an engine oil collected in a crankcase of an internal combustion engine, the crankcase housing an oil pump for pumping up the engine oil, the crankcase defining a suction passage for guiding the engine oil to a suction opening of the oil pump, the apparatus comprising: a vaporized fuel passageway defined in the crankcase; and a vaporized fuel conduit extending from the fuel tank to the vaporized fuel passageway, wherein the vaporized fuel passageway is configured to discharge the vaporized fuel into the engine oil at a level below a predetermined lower limit level of the engine oil and above an inlet of the suction passage.

It is to be noted that the predetermined lower limit level corresponds to a lower limit level inscribed on an oil level gauge.

Preferably, the vaporized fuel passageway has a discharge port for discharging the vaporized fuel into the engine oil, the discharge port being disposed proximate a lateral center of the crankcase.

Preferably, the internal combustion engine is a transverse engine having a crankshaft extending laterally of a vehicle and a cylinder extending forward of the vehicle, the crankcase having a counterweight accommodation portion accommodating counterweights of the crankshaft, the vaporized fuel passageway being disposed within a width of the counterweight accommodation portion.

According to the invention, the crankcase includes a left case half and a right case half, the left case half having a division surface parallel to a longitudinal axis of a vehicle, the right case half having a division surface parallel to the longitudinal axis of the vehicle, the left case half and the right case half being divisibly mated together at the division surfaces, the division surfaces jointly defining the vaporized fuel passageway.

Preferably, the crankcase has a mating surface mating with the cylinder, the vaporized fuel passageway includes a first passageway defined in the mating surface of the crankcase and a second passageway extending from the first passageway into the engine oil.

Preferably, the vaporized fuel passageway extends from above the crankshaft to below the crankshaft.

Preferably, the vaporized fuel passageway comprises a joint pipe having one end inserted into a through-hole defined in the crankcase and an opposite end extending into the engine oil, and wherein the vaporized fuel conduit connected to the one end of the joint pipe extends along an outer face of the crankcase and an outer periphery of an AC generator provided at one end of the crankshaft.

Preferably, the crankcase has a drain hole for discharging the engine oil, the drain hole having an axis parallel to an axis of the through-hole.

Preferably, the joint pipe has a distal end portion defining a plurality of holes, the distal end portion having a closed end located ahead of the plurality of the holes.

Preferably, the internal combustion engine is a power unit extending rearward of a vehicle, the power unit being vertically swingably attached to a vehicle body frame, and wherein the vaporized fuel passageway has a discharge port for discharging the vaporized fuel into the engine oil, the discharge port being disposed rearward of a crankshaft of the power unit.

According to the invention, the vaporized fuel conduit has a check valve for allowing only flow of the vaporized fuel from the fuel tank into the crankcase.

Preferably, the check valve is located at a level higher than a predetermined upper limit level of the engine oil collected in the crankcase.

It is to be noted that the predetermined upper limit level corresponds to an upper limit level inscribed on an oil level gauge.

### Advantageous Effects of Invention

According to the invention, the vaporized fuel is discharged into the engine oil at a level lower than the predetermined lower limit level of engine oil contained in the crankcase. Although the oil level of the engine oil varies due to piston pumping action, the vaporized fuel is reliably stored in the engine oil because the vaporized fuel is discharged at the level below the predetermined lower limit level. Further, even when the oil level of the engine oil varies during an engine oil change, the vaporized fuel is reliably stored in the engine oil because the vaporized fuel is discharged at the level lower than the predetermined lower limit level.

Further, the vaporized fuel is discharged into the engine oil at a level higher than an inlet of a suction passage of an oil pump. The discharged vaporized fuel is light, and thus accumulates in an upper layer of the engine oil. The inlet of the suction passage is located in a lower layer of the engine oil, and thus there are no concerns that the vaporized fuel may be pumped directly into the oil pump.

### BRIEF DESCRIPTION OF DRAWINGS

Fig. 1 is a left side view of a vehicle;
Fig. 2 is a diagrammatical view of a fuel system of an internal combustion engine;
Fig. 3 is a graph showing engine, solenoid and PCV operations;
Fig. 4 is a view of a left case half of a crankcase in an embodiment of the invention as the left case half is viewed from a side of a division surface of the left case half;
Fig. 5 is a view of the right case half of the crankcase in the embodiment of the invention as the right case half is viewed from a side of a division surface of the right case half;
Fig. 6 is a cross-sectional view of the crankcase in the embodiment of the invention;
Fig. 7 is a partial cross-sectional view of the crankcase with a crankshaft removed;
Fig. 8 is a cross-sectional view taken along line 8-8 in Fig. 7;
Fig. 9 is a view of the right case half of the crankcase in a first example not covered by the claims as the right case half is viewed from a side of the division surface of the right case half;
Fig. 10 is a cross-sectional view of a joint pipe attached to the right case half;
Fig. 11 is a right side view of the crankcase in the first example;
Fig. 12 is a cross-sectional view of the crankcase in the first example;
Fig. 13 is a view of the right case half of the crankcase in a second example not covered by the claims as the right case half is viewed from the side of the division surface of the right case half;
Fig. 14 is a cross-sectional view taken along line 14-14 of Fig. 13;
Fig. 15 shows a modification of the crankcase shown in Fig. 14;
Fig. 16 is a right side view of the crankcase in the second example;
Fig. 17 is a view of the right case half of the crankcase in a third example not covered by the claims as the right case half is viewed from the side of the division surface of the right case half;
Fig. 18 is a view of the right case half as viewed in a direction indicated by line 18-18 of Fig. 17;
Fig. 19 is a view of the right case half of the crankcase in a fourth example not covered by the claims as the right case half is viewed from the side of the division surface of the right case half;
Fig. 20 is a cross-sectional view taken along line 20-20 of Fig. 19;
Fig. 21 is a plan view of a vehicle; and
Fig. 22 is a left side view of the vehicle.

### DESCRIPTION OF EMBODIMENTS

The embodiment and several examples are described below, with reference to the accompanying drawings. A vehicle shown is a two-wheel motorcycle vehicle, but may be a three- or four-wheel motorcycle.

### Embodiment

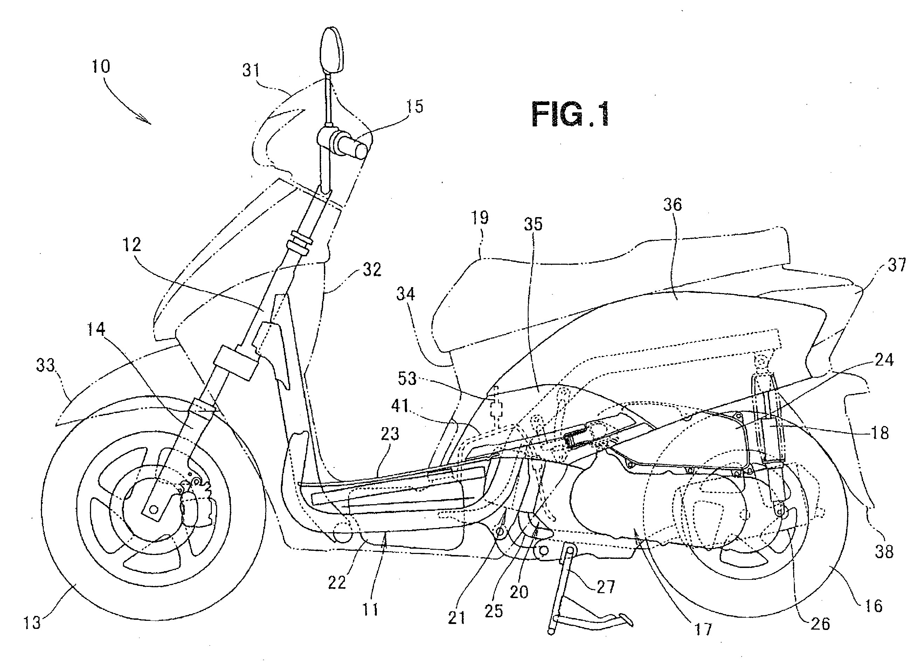

As shown in Fig. 1, a two-wheel motorcycle 10 includes a vehicle body frame 11 extending in a longitudinal direction of the motorcycle. The frame 11 has a front portion to which is connected a head pipe 12. Attached to the head pipe 12 is a steerable front fork 14 for supporting a front wheel 13. The front fork 14 has an upper end on which is provided a steering handle 15. The motorcycle 10 includes a power unit 17 vertically swingably attached to a rear portion of the frame 11 for supporting a rear wheel 16 and transmitting power to the rear wheel 16. The motorcycle 10 includes a rear cushion 18 interconnecting the power unit 17 and the rear portion of the vehicle body frame 11 for controlling vertical movement of the power unit 17, and a rider's seat 19 disposed above the power unit 17. The vehicle body frame 11, the front fork 14, the steering handle 15, the power unit 17, the rear cushion 18 and the seat 19 are main components of the motorcycle 10.

The power unit 17 includes an internal combustion engine 20 disposed at a front portion thereof. The internal combustion engine 20 has a cylinder 21 extending forward of the motorcycle. The internal combustion engine 20 with an axis of the cylinder 21 generally oriented horizontally is called a transverse engine. A fuel tank 22 containing a fuel to be delivered to the internal combustion engine 20 is disposed rearward of the head pipe 12 and forward of the cylinder 21, and is located below a step 23 on which the rider rests his feet.

An air cleaner 24 for cleaning air to be delivered to the internal combustion engine 20 is disposed along an upper face of the power unit 17. An exhaust pipe 25 extends downward from the cylinder 21 and then extends rearward of the motorcycle along the power unit 17. A silencer 26 connected to a distal end of the exhaust pipe 25 is disposed on a right side of the rear wheel 16.

A stand 27 is provided below the power unit 17. The stand 27 can swing to a horizontal position during travelling of the motorcycle.

Preferably, the steering handle 15 is covered by a handle cover 31. The front fork 14 is covered by a front cover 32. A front fender 33 extends forward from the front cover 32 and covers an upper portion of the front wheel 13. A center cover 34, side front cover 35, and side rear cover 36 are disposed below the seat 19. A tail lamp 37 and rear fender 38 are disposed at a rear portion of the side rear cover 36.

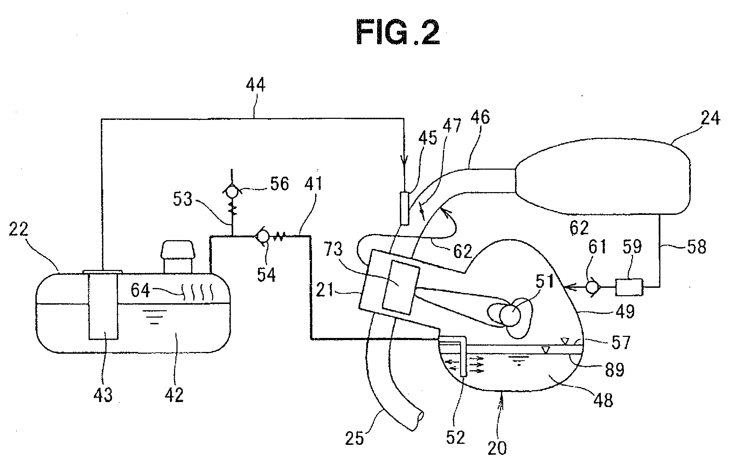

A vaporized fuel conduit 41 extends from the fuel tank 22 to the internal combustion engine 20. The fuel system including the vaporized fuel conduit 41 is described in detail with reference to Fig. 2.

As shown in Fig. 2, a liquid fuel 42 in the fuel tank 22 is pumped up by a fuel pump 43 and then supplied via a fuel feed pipe 44 to a fuel injection valve 45 for injecting the supplied liquid fuel 42 into an intake pipe 46. A throttle 47 is provided in the intake pipe 46 for controlling an air flow.

The internal combustion engine 20 comprises a crankcase 49 containing engine oil 48, a crankshaft 51 rotatably accommodated in the crankcase 49, a piston 73 reciprocated by the crankshaft 51, and a cylinder 21 accommodating the piston 73. The crankcase 49 defines a vaporized fuel passageway 52 for discharging a vaporized fuel into the engine oil.

The vaporized fuel conduit 41 extends from the fuel tank 22 and has a distal end connected to the vaporized fuel passageway 52. A branching pipe 53 connected to the vaporized fuel conduit 41, and a check valve 54 disposed in the vaporized fuel conduit 41 are arranged in order in a direction of flow of the vaporized fuel.

The check valve 54 is adapted to allow only flow of vaporized fuel from the fuel tank 22 into the crankcase 49. The check valve 54 prevents vaporized fuel from flowing from within the crankcase 49 back to the fuel tank 22.

Preferably, the check valve 54 is disposed above a predetermined upper limit level 57 of the engine oil 48 contained in the crankcase 49. A difference in height between the check valve 54 and the crankcase 49 allows vaporized fuel to fall from the check valve 54 into the crankcase 49. Since it is not likely that vaporized fuel is contained in the check valve 54, operation of the check valve 54 is smooth.

The branching pipe 53 has another check valve 56. The check valve 56 is adapted to allow only flow of an outside air into the vaporized fuel conduit 41. Due to sudden changes in ambient temperature or other factors, an internal pressure of the fuel tank 22 may drop suddenly. At such times, the check valve 54 is closed while the other check valve 56 opens to take in an outside air, so that the internal pressure of the fuel tank 22 can return to a prescribed pressure.

The branching pipe 53 is disposed in a space defined by the center cover 34 and side front cover 35, as shown in Fig. 1. Since this space contains clean air, an air taken in by the branching pipe 53 disposed in the space is clean, and therefore, there are no concerns that the fuel tank 22 or vaporized fuel conduit 41 are made dirty.

Further, an air supply pipe 58 extends from the air cleaner 24 to the crankcase 49. A check valve 61 is provided in the air supply pipe 58. The check valve 61 serves to prevent fluid from flowing from the crankcase 49 back to the air cleaner 24.

Further, a breather pipe 62 extends from the crankcase 49 to the intake pipe 46. A vaporized fuel is supplied to the intake pipe 46 by the breather pipe 62.

The vaporized fuel 64 guided to the engine oil 48 is retained by dissolution in the engine oil 48.

Further, when the engine 20 starts and the engine oil 48 is warmed, the gasoline component separates from the oil and turns into a gas.

The gasified vaporized fuel is returned to the intake pipe 46 through the breather pipe 62, and gets combusted and processed by the engine 20.

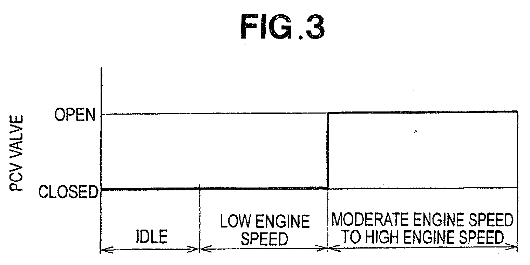

The PCV valve 59 moves between an open position and a closed position, as shown in Fig. 3. The PCV valve 59 adjusts a quantity of an outside air flowing into the engine 20. More specifically, an outside air is supplied to the interior of the engine 20 by the air supply pipe 58 at an engine speed between a moderate engine speed and a high engine speed, and vaporized fuel in the engine 20 can be smoothly returned to the intake pipe 46 by the breather pipe 62. Thus, even when a large quantity of a vaporized fuel is stored in the engine oil 48, a vaporized fuel can be returned to the intake pipe 46 at the engine speed between the moderate engine speed and the high engine speed where an sufficient engine output is provided, and consequently any impact on the vehicle ride quality can be prevented.

Next, a structure of the crankcase 49 and the vaporized fuel passageway 52 defined in the crankcase 49 are described in detail below.

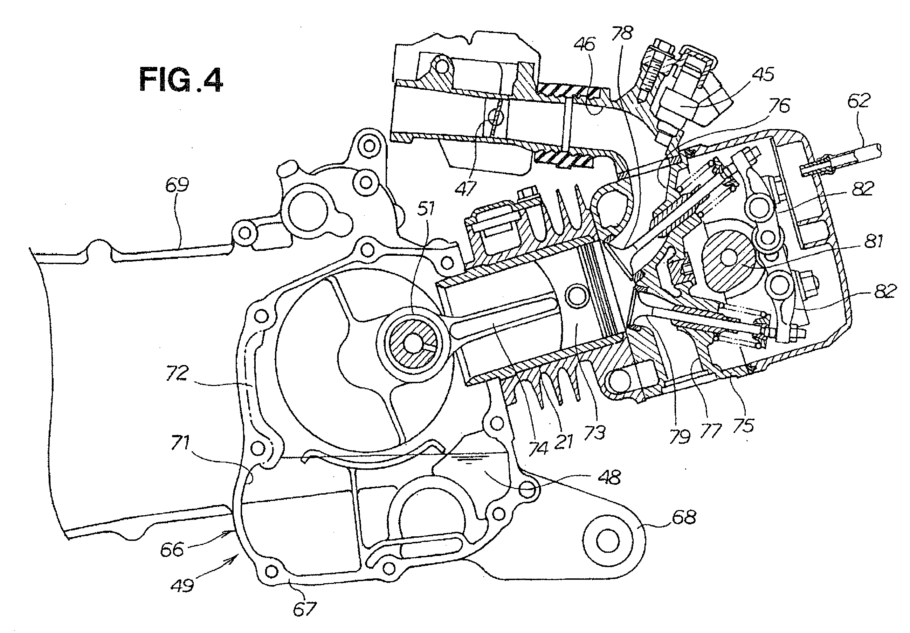

Fig. 4 shows a left case half 66 of the crankcase 49. In Fig. 4, there is shown a pivot arm portion 68 extending forward from a lower front portion of the left case half 66.

The left case half 66 has a division surface 67 extending in parallel to a longitudinal axis of the motorcycle. The crankshaft 51 extends perpendicularly to the division surface 67 and extends laterally of the motorcycle.

The left case half 66 is formed integrally with a front portion of a power unit case 69.

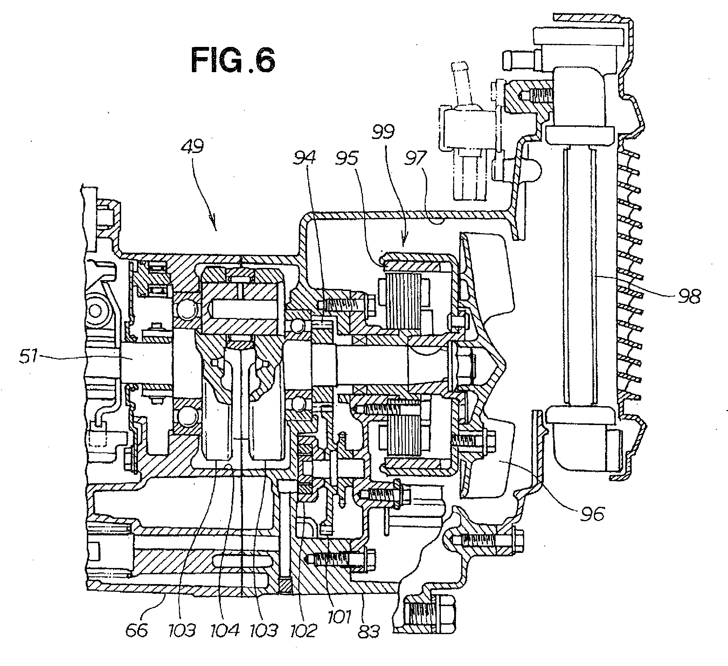

The left case half 66 has a substantially rectangular crank chamber 71. The crank chamber 71 has an upper portion accommodating the crankshaft 51, and a lower portion equipped with an oil pump 102 (Fig. 6). The engine oil 48 contained in the lower portion of the crank chamber 71 is suctioned by the oil pump.

In the illustrated embodiment, the rear portion of the crank chamber 71 includes a lid portion 72 extending from the division surface 67 into the crank chamber 71. More specifically, an imaginary line is an outline of the crank chamber 71, and the lid portion 72 is a vertical strip protruding from the imaginary line. The lid portion 72 and an L-section wall described below jointly define the vaporized fuel passageway.

The cylinder 21 extends from the left case half 66, and the piston 73 is movably accommodated in the cylinder 21. The piston 73 is connected to the crankshaft 51 by a connecting rod 74. A cylinder head 75 is placed on the cylinder 21. The cylinder head 75 defines an intake port 76 and an exhaust port 77.

An intake valve 78 is disposed in the intake port 76, and an exhaust valve 79 is disposed in the exhaust port 77. Further, a camshaft 81, and rocker arms 82, 82 which are driven by the camshaft 81, are mounted on the cylinder head 75. The intake valve 78 and exhaust valve 79 are opened and closed by the camshaft 81.

The intake pipe 46 is connected to the intake port 76, and the intake pipe 46 is provided with a fuel injection valve 45.

A structure of a right case half 83 to mate with the left case half 66 is describe below.

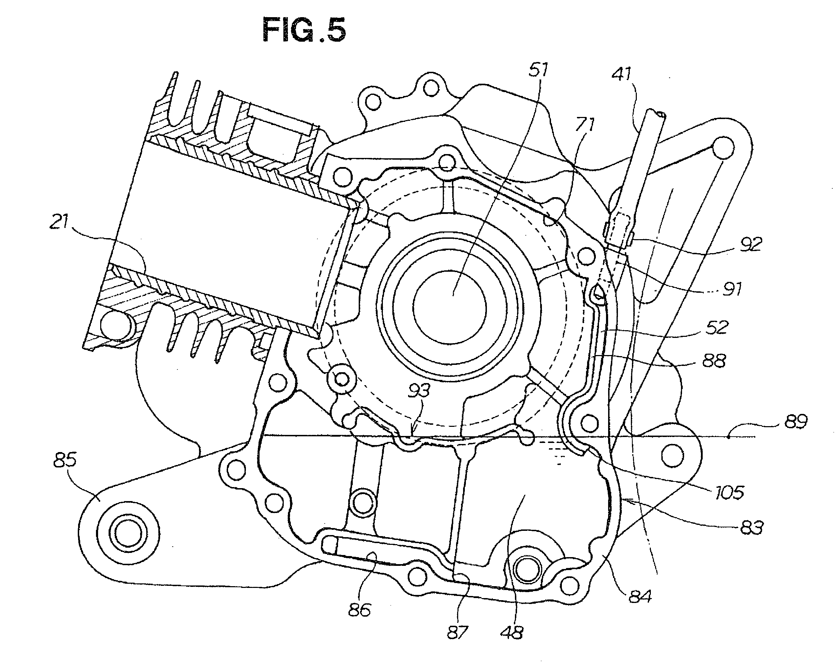

Fig. 5 shows the right case half 83 of the crankcase 49. In Fig. 5, there is shown a pivot arm portion 85 extending forward from a lower front portion of the right case half 83.

The right case half 83 has a substantially rectangular crank chamber 71 for containing the engine oil 48.

The crank chamber 71 has a bottom defining a suction passage 86 for guiding the engine oil 48 to the oil pump 102 (Fig. 6). The suction passage 86 has one end bent downward. As a result, an inlet 87 of the suction path 86 is located at a low level.

The right case half 82 includes a rear portion having an L-shaped-cross-sectional wall 88 along a division surface 84 of the right case half 82. The L-shaped-cross-sectional wall 88 is a principal portion of the vaporized fuel passageway 52. The vaporized fuel passageway 52 has a lower end located below a predetermined lower limit level 89 of the engine oil 48 and above the inlet 87 of the suction path 86.

A tube fitting 91 is driven from outside into the right case half 83 and is inserted into an upper end of the vaporized fuel passageway 52. The tube fitting 91 is covered by a distal end of the vaporized fuel conduit 41, and the distal end of the vaporized fuel conduit 41 is fixed to the tube fitting 91 by a clamp 92.

More specifically, the vaporized fuel passageway 52 extends from above the crankshaft 51 to below the crankshaft 51. As a result, the tube fitting 91 is disposed in a level sufficiently higher than an oil level 93, such that no engine oil enters the tube fitting 91, and hence there are no concerns that engine oil may leak from around a seal disposed about the tube fitting 91. Unless severe sealing properties are required, a simple structure can be used to connect the vaporized fuel path 52 and the vaporized fuel conduit pipe 41.

The vaporized fuel 64 (Fig. 2) generated within the fuel tank 22 passes through the vaporized fuel conduit 41 and then through the vaporized fuel passageway 52 shown in Fig. 5, and is blown into the engine oil 48. More specifically, the vaporized fuel is discharged at a level below the predetermined lower limit level 89 of the engine oil 48. Although the oil level 93 of the engine oil 48 varies due to piston pumping action, the vaporized fuel is reliably stored in the engine oil 48 because the vaporized fuel is discharged at the level below the predetermined lower limit level 89. Further, even when the oil level 93 of the engine oil 48 varies during an engine oil change, the vaporized fuel is reliably stored in the engine oil 48 because the vaporized fuel is discharged at the level lower than the predetermined lower limit level 89.

Further, the vaporized fuel is discharged into the engine oil 48 at a level higher than the inlet 87 of the suction passage 86. The discharged vaporized fuel is light, and thus accumulates in an upper layer of the engine oil 48. The inlet 87 of the suction passage 86 is located in a lower layer of the engine oil 48, and thus there are no concerns that the vaporized fuel may be pumped directly into the oil pump 102 (Fig. 6).

The vaporized fuel passageway 52 is defined by the left case half 66 and the right case half 83 mated together, which is described in detail below.

As shown in Fig. 6, the crankcase 49 is formed by mating the left case half 66 and the right case half 83 together. An oil pump driving gear 94 and a generator rotor 95 are fixed to one end of the crankshaft 51 housed within the crankcase 49. A cooling fan 96 is fixed to the generator rotor 95. When the crankshaft 51 rotates, the cooling fan 96 rotates to draw an outside air into a shroud 97. The air, which is drawn into the shroud 97, cools a radiator 98, an AC generator 99 and the like in sequence.

A driven gear 101 is rotated by the oil pump driving gear 94 to rotate the oil pump 102.

The crankcase 49 has a counterweight accommodation portion 104 surrounding counterweights 103, 103 of the crankshaft 51.

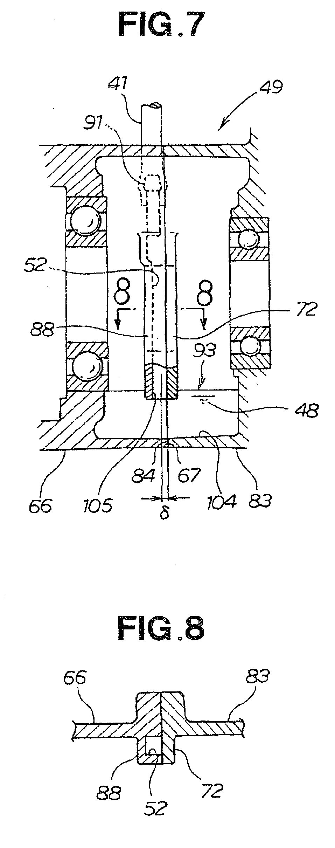

A shape of the counterweight accommodation portion 104 is best shown in Fig. 7 with the crankshaft 51 removed for the purpose of clarity.

As shown in Fig. 8 a cross-sectional view taken along line 8-8 in Fig. 7, the left case half 66 has the projecting L-shaped-cross-sectional wall 88. The right case half 83 has a projecting lid portion 72.

With the left case half 66 and the right case half 83 mated together at their respective division surfaces 84, 67, the L-shaped-cross-sectional wall 88 and the lid portion 72 jointly define the vaporized fuel passageway 52 of rectangular cross-section.

As is clear from Fig. 7, the vaporized fuel passageway 52 has a discharge port 105 located at a substantially lateral center of the crankcase 49.

Vehicles, in particular, two-wheel motorcycles may be inclined rightward or leftward. At such times, the crankcase 49 may be also inclined rightward or leftward. Since the discharge port 105 is located at the substantially lateral center of the crankcase 49, the discharge port 105 is less likely to be spaced upward from the oil level 93. As a result, it is possible to keep discharging the vaporized fuel into the engine oil 48.

The vaporized fuel passageway 52 is disposed within a width of the counterweight accommodation portion 104 of the crankcase 49. As explained in relation to Fig. 6, the crankshaft 51 includes the pair of the counterweights 103, 103. The vaporized fuel passageway 52 is disposed between the two counterweights 103, 103 within the width of the counterweight accommodation portion 104. The vaporized fuel passageway 52 disposed between the counterweight 103, 103 is advantageous in that the crankcase 49 has the vaporized fuel passageway 52 without having to increase its volume. Thus, the crankcase 49 is kept small in size.

As is clear from Fig. 7 and Fig. 8, the crankcase 49 includes the left case half 66 and the right case half 83 which are divisibly mated together at the division surfaces 67 and 84 parallel to the longitudinal axis of the motorcycle. The vaporized fuel passageway 52 is defined by these division surfaces 67 and 84.

The division surfaces 67 and 84 are finished by machining. Through the machining, the vaporized fuel passageway 52 is also simultaneously finished. As a result, the cost of machining the vaporized fuel passageway 52 can be reduced.

As shown in Fig. 7, a center of the discharge port 105 of the vaporized fuel passageway 52 is offset an amount δ leftward from the division surface 67. The two-wheel motorcycle is generally provided with a side stand. Such a side stand is typically provided on a left side of the motorcycle. When the motorcycle is parked using the side stand, the motorcycle body leans leftward. Since the discharge port 105 of the vaporized fuel passageway 52 is offset leftward, the discharge port 105 is less likely to be spaced upward from the oil level 93 with the motorcycle body inclined leftward. It is thus preferred that the discharge port 105 be offset toward a side on which the side stand is installed.

### First Example

In the first example, the same elements as those shown in the embodiment are designated by the same reference numerals, and descriptions of such elements are omitted.

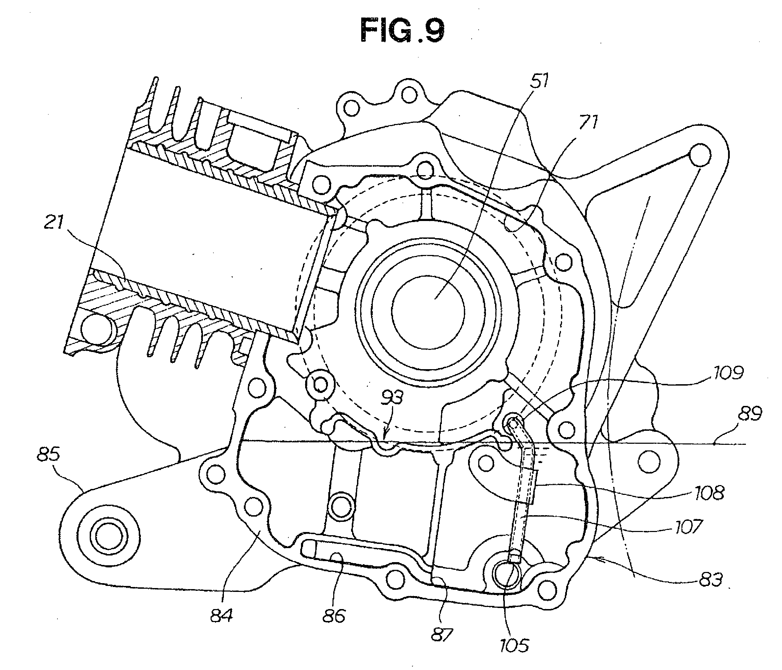

As shown in Fig. 9, a joint pipe 107 is mounted on the right case half 83. The joint pipe 107 extends vertically and has the discharge port 105 located below the predetermined lower limit level 89 and above the inlet 87 of the suction passage 86. The joint pipe 107 is fixed to the right case half 83 by a pipe fastening member 108.

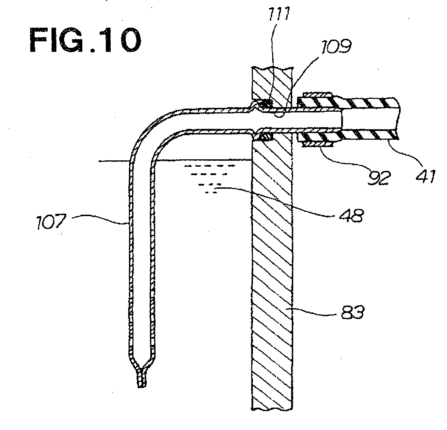

As shown in Fig. 10, the right case half 83 defines a through-hole 109, and the joint pipe 107 has one end inserted through the through-hole 109. The one end of the joint pipe 107 protruding out of the right case half 83 is covered by the vaporized fuel conduit 41. A gap between the joint pipe 107 and the through-hole 109 is closed by a sealing member 111.

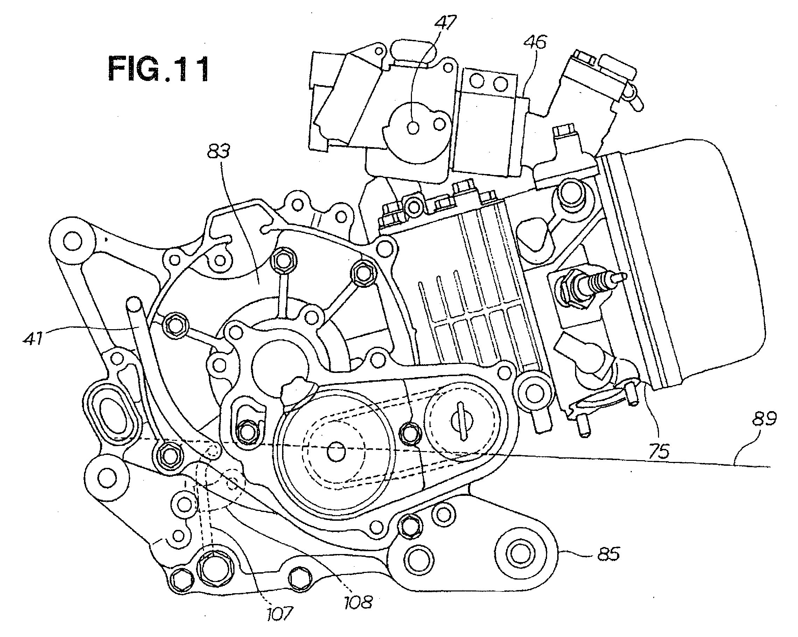

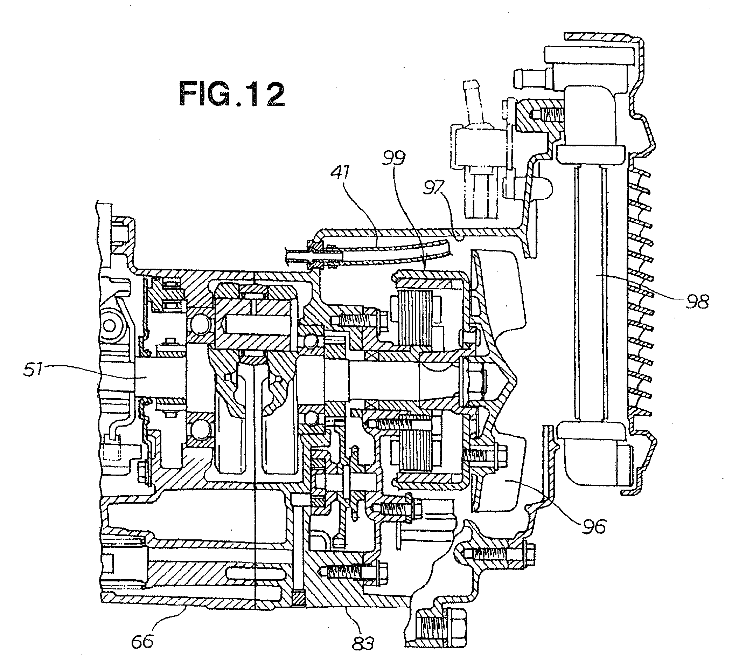

This vaporized fuel conduit 41 extends along an outer face of the right case half 83, as shown in Fig. 11. As shown in Fig. 12, the vaporized fuel conduit 41 extends along an outer periphery of the AC generator 99 and cooling fan 96 provided at the one end of the crankshaft 51.

In Fig. 9, the through-hole 109 may be located on the right or on left side of the crankshaft 51. The through-hole 109 can be located close to the crankshaft 51.

In addition, the shape of the joint pipe 107 can be modified. Thus, the vaporized fuel passageway and the vaporized fuel conduit mat take a route depending upon the shape of the right case half 83 and the size of the AC generator 99.

### Second Example

In the second example, the same elements as those shown in the embodiment and the first example are designated by the same reference numerals, and descriptions of these elements are omitted.

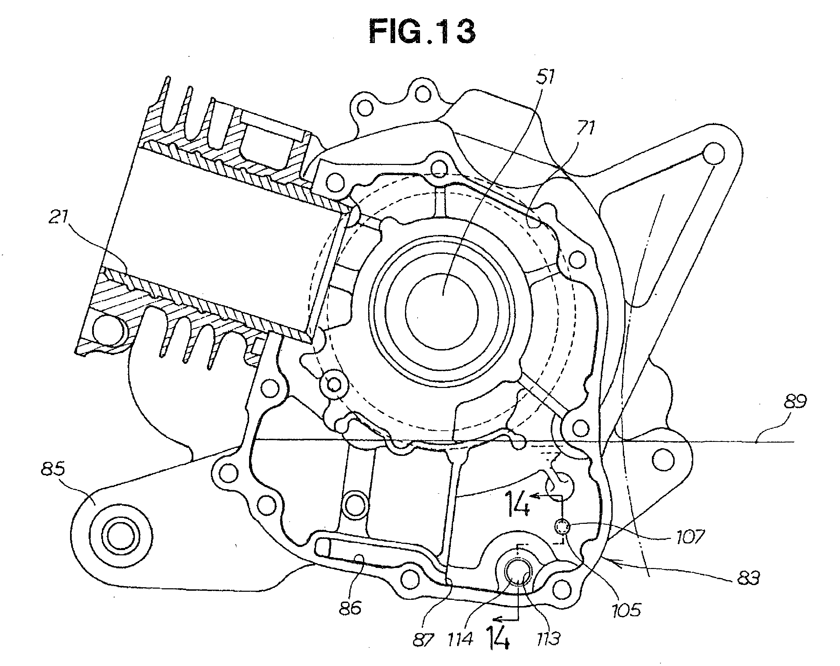

As shown in Fig. 13, a joint pipe 107 is mounted on the right case half 83. The joint pipe 107 extends in a direction perpendicular to a sheet of Fig. 13. The joint pipe 107 has the discharge port 105 located below the predetermined lower limit level 89 and above the inlet 87 of the suction passage 86.

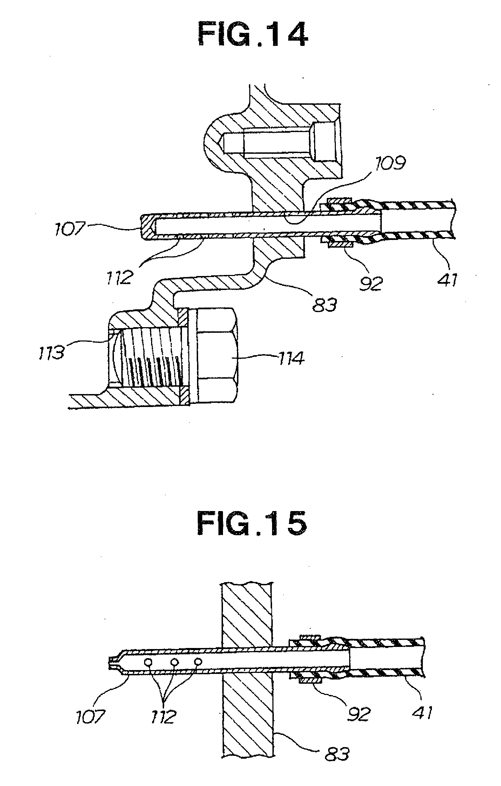

As shown in Fig. 14 a cross-sectional view along line 14-14 in Fig. 13, the right case half 83 defines a through-hole 109, and the joint pipe 107 has one end inserted through the through-hole 109. The one end of the joint pipe 107 protruding out of the right case half 83 is covered by the vaporized fuel conduit 41.

The joint pipe 107 defines a plurality of holes 112, and has a closed distal end located ahead of these holes 112. The vaporized fuel passing through the plurality of holes 112 have bubbles of small diameters, and thus are effectively mixed into the engine oil.

The crankcase defines a drain hole 113 for discharging the engine oil during engine oil change. The drain hole 113 is typically closed by a plug 114.

The drain hole 113 has an axis parallel to an axis of the through-hole 109. The drain hole 113 is formed by a drill bit. At the time, such a drill bit is replaced with another drill bit for forming the through-hole 109. That is, the time required for machining can be shortened.

As shown in Fig. 15, the joint pipe 107 may be a commercially available pipe having a tip end crushed. The joint pipe 107 is available for a more inexpensive price than the vaporized fuel passageway 52.

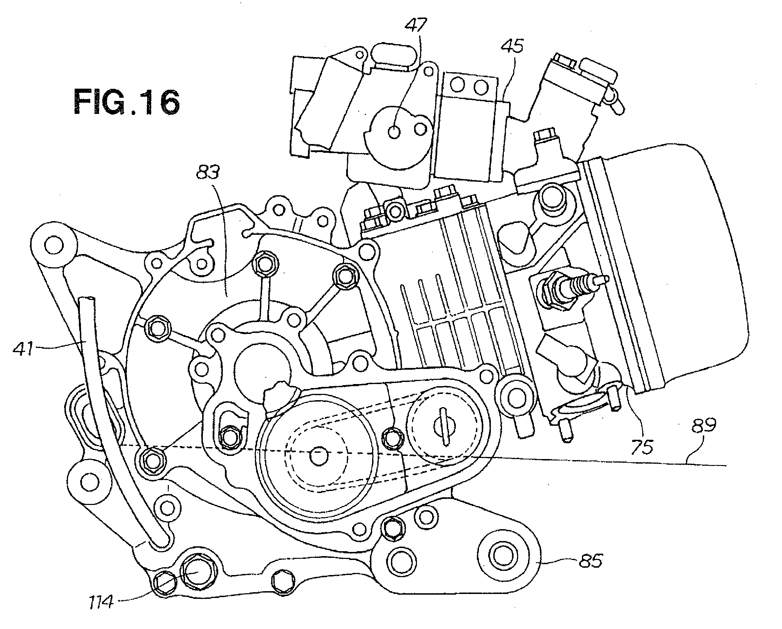

The vaporized fuel conduit 41 connected to the joint pipe 107 extends along an outer face of the right case half 83, as shown in Fig. 16.

### Third Example

In the third example, the same elements as those shown in the embodiment are designated by the same reference numerals, and descriptions of these elements are omitted.

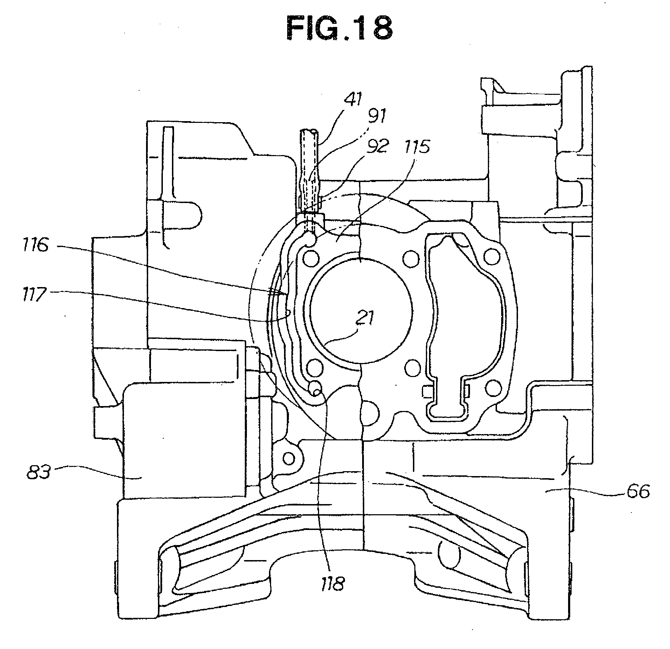

As shown in Fig. 18, a groove 117 providing a first passageway 116 is defined in a deck face 115 mating with the cylinder. The vaporized fuel conduit 41 is connected to one end of the groove 117 via the tube fitting 91.

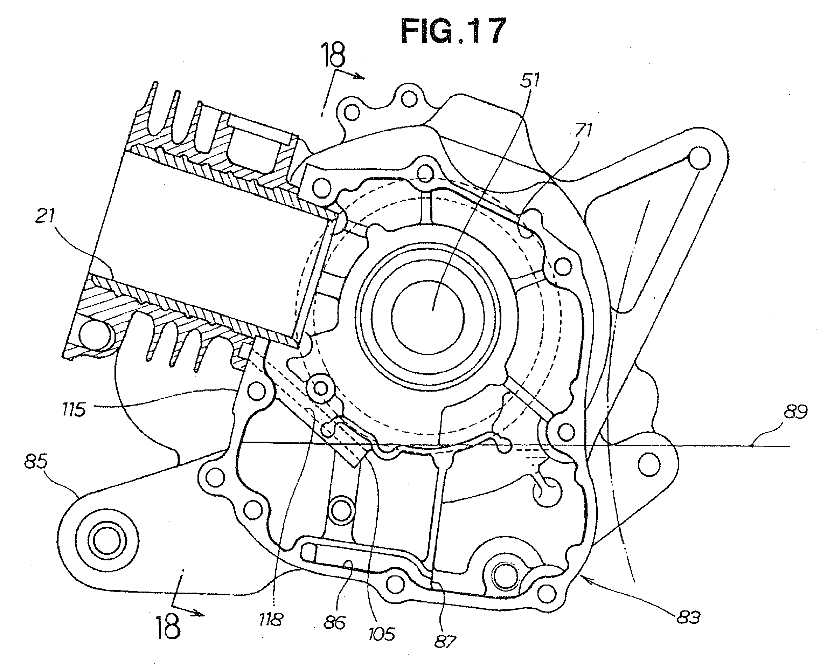

A second passageway 118 extends from the groove 117. As shown in Fig. 17, the second passageway 118 is defined in the right case half 83 and has the discharge port 105 located below the predetermined lower limit level 89 and above the inlet 87 of the suction passage 86.

The first passageway 116 provided by the groove 117 is covered by a lower face of the cylinder.

The groove 117 is formed simultaneously during machining operation on the deck face 115. Thus, the first passageway 116 provided by the groove 117 can be formed at a slight cost.

The groove 117 can be provided on the cylinder side. In the case, the groove can be formed simultaneously during machining operation on the cylinder.

In this example, thus, the vaporized fuel passageway 52 comprises the first passageway 116 defined in the surface of the crankcase mating with the cylinder, and the second passageway 118 extending from the first passageway 116 into the engine oil. The cost of manufacturing the first passageway 116 can be decreased.

### Fourth Example

In the fourth example, the same elements as those shown in the embodiment are designated by the same reference numerals, and descriptions of these elements are omitted.

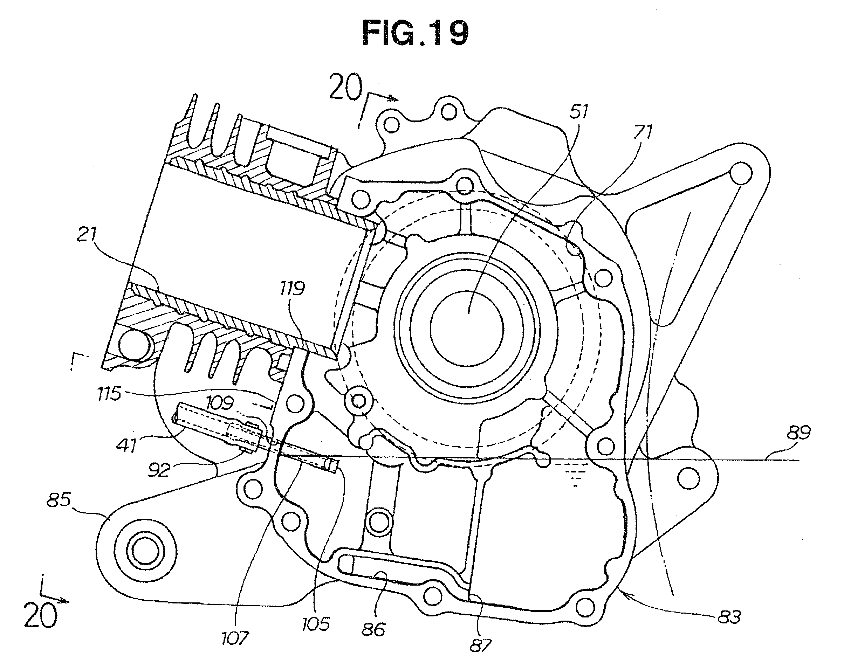

As shown in Fig. 19, a joint pipe 107 is mounted on the right case half 83. The joint pipe 107 extends obliquely with the discharge port 105 located below the predetermined lower limit level 89 and above the inlet 87 of the suction path 86.

The deck face 115 defines a through-hole 109, and the joint pipe 107 is inserted through the through-hole 109.

The through-hole 109 may have an axis parallel to an axis of the cylinder 21. When the deck face 115 is formed to provide an insertion hole 119 for insertion of the cylinder 21 thereinto, the through-hole 109 can be machined, and the number of machining processes for the through-hole 109 can be decreased.

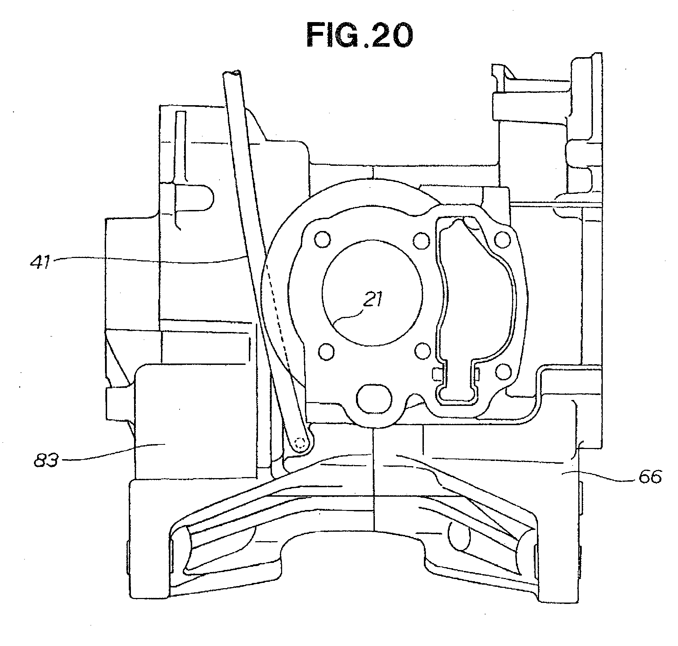

As shown in Fig. 20, the vaporized fuel conduit 41 connected to one end of the joint pipe 107 extends along an upper face of the crankcase, avoiding the cylinder 21.

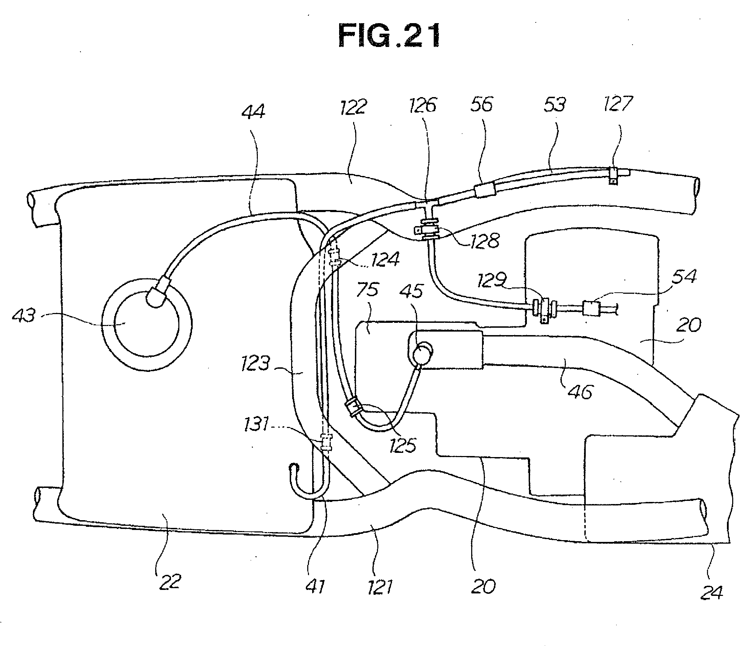

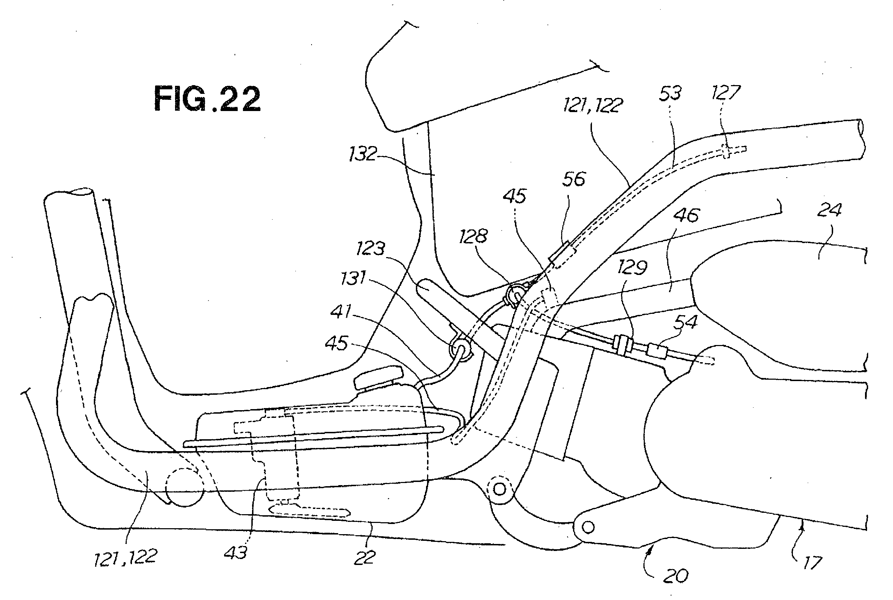

Next, a preferred layout for the vaporized fuel conduit 41 (Fig. 2) and the fuel feed pipe 44 (Fig. 2) is described with reference to Fig. 21 and Fig. 22.

As shown in Fig. 21, the fuel tank 22 spans a space defined between a left longitudinal frame 121 and a right longitudinal frame 122. A crossframe 123 is disposed rearward of the fuel tank 22 and interconnects the left longitudinal frame 121 and right longitudinal frame 122.

The fuel feed pipe 44 extends rearward from the fuel pump 43 along the upper face of the fuel tank 22 toward the right longitudinal frame 122, runs laterally of the motorcycle below the crossframe 123 and obliquely upward, and curves and extends to the fuel injection valve 45. In other words, the fuel feed pipe 44 extends in an S-shape from the fuel pump 43 to the fuel injection valve 45, as viewed in plan.

The fuel feed pipe 44 is supported by the crossframe 123 and the cylinder head 75, passing through a grommet 124 on the crossframe 123 and a grommet 125 on the cylinder head 75.

The cylinder head 75 can pivot relative to the crossframe 123 in a direction perpendicular to a sheet of Fig. 21.

The grommet 124 is disposed on the non-pivotable member, and the grommet 125 is the pivotable member. The fuel feed pipe 44 is flexible between the grommet 124 and the grommet 125 such that the fuel feed pipe 44 is displaced by pivotal movement of the cylinder head 75.

Further, the vaporized fuel conduit 41 extending from the rear left corner of the fuel tank 22 extends below the crossframe 123 to the right longitudinal frame 122, and then runs rearward along the right longitudinal frame 122. The vaporized fuel conduit 41 is connected to the branching pipe 53 through a T-shape fitting 126. The branching pipe 53 extends rearward of the motorcycle along the right longitudinal frame 122. The distal end of the branching pipe 53 is opened to the atmosphere. The distal end portion of the branching pipe 53 is fixed to the right longitudinal frame 122 by a clamp 127.

The vaporized fuel conduit 41 provides a flow path bending 90 degrees at the T-shape fitting 126. The flow path extends toward the lateral center of the motorcycle, and then runs rearward of the motorcycle along the cylinder head 75.

The vaporized fuel conduit 41 is supported by the right longitudinal frame 122 and the internal combustion engine 20, passing through the grommet 128 disposed at an outlet of the T-shape fitting 126 and the grommet 129 on the internal combustion engine 20.

The grommet 128 is disposed on the non-pivotable member, and the grommet 129 is disposed on the pivotable member. The vaporized fuel conduit 41 is flexible between the grommet 128 and the grommet 129 such that the vaporized fuel conduit 41 is displaced by pivotal movement of the internal combustion engine 20.

As shown in Fig. 22, the vaporized fuel conduit 41 is fixed to the crossframe 123 by a grommet 131, to the right longitudinal frame 122 by the grommet 128, and to the internal combustion engine 20 by the grommet 129. The branching pipe 53 extends rearward of the motorcycle past a right side of a luggage compartment 132.

In Fig. 21, the vaporized fuel conduit 41 extending from the fuel tank 22 runs transversely of the motorcycle from the left longitudinal frame 121 to the right longitudinal frame 122.

When the motorcycle tips rightward, the motorcycle side including the grommet 131 is raised, namely, the inlet of the vaporized fuel conduit 41 is brought to a higher level. With the inlet of the vaporized fuel conduit 41 at the higher level, no fuel in the fuel tank 22 might flow into the vaporized fuel conduit 41.

When the motorcycle tips leftward, the motorcycle side including the T-shape fitting 126 is raised. Fuel in the fuel tank 22 would then enter the vaporized fuel conduit pipe 41. With the T-shape fitting 126 in the raised position, however, no fuel might flow through the T-shape fitting 126 into the internal combustion engine 20.

The check valve 54 is disposed proximate the grommet 129. The check valve 54 is constantly warmed by the heat of the internal combustion engine 20. Even if vaporized fuel accumulates in the check valve 54, the vaporized fuel would be dried. The check valve 54 is in a dry state, and hence has an extended life.

The apparatus for guiding a vaporized fuel is described as being applied to the motorcycle in the embodiments discussed above, but the apparatus is applicable to other types of conventional vehicles such as a three-wheel vehicle.

### INDUSTRIAL APPLICABILITY

The apparatus for guiding a vaporized fuel according to the present invention is suitable for use in a motorcycle.

### Reference Signs List

- 11: a vehicle frame,
- 17: a power unit
- 20: an internal combustion engine
- 21: a cylinder
- 22: a fuel tank
- 41: a vaporized fuel conduit
- 48: an engine oil
- 49: a crankcase
- 51: a crankshaft
- 52: a vaporized fuel passageway
- 57: a predetermined upper limit level
- 64: a vaporized fuel
- 66: a left case half
- 67,: 84 division surfaces
- 83: a right case half
- 86: a suction passage
- 87: an inlet of suction passage
- 89: a predetermined lower limit level
- 99: an AC generator
- 102: an oil pump
- 103: a counterweight
- 104: a counterweight accommodation portion
- 105: a discharge port of the vaporized fuel passageway
- 107: a joint pipe
- 109: a through-hole
- 112: a hole defined in joint pipe
- 113: a drain hole
- 116: a first passageway
- 118: a second passageway

## Claims

1. A vehicle comprised of a motorcycle (10) or a motor tricycle and including a body frame (11), a fuel tank (22), an internal combustion engine (20), and an apparatus for guiding a vaporized fuel generated in the fuel tank (22) into an engine oil (48) collected in a crankcase (49) of the internal combustion engine (20), the crankcase (49) housing an oil pump (102) for pumping up the engine oil, the crankcase (49) defining a suction passage (86) for guiding the engine oil to a suction opening of the oil pump (102), the apparatus comprising:
a vaporized fuel passageway (52) defined in the crankcase (49); and
a vaporized fuel conduit (41) extending from the fuel tank (22) to the vaporized fuel passageway (52),
wherein the vaporized fuel conduit (41) has a first check valve (54) for allowing only flow of the vaporized fuel from the fuel tank (22) into the crankcase (49),
**characterized in that** the crankcase (49) includes a left case half (66) and a right case half (83) mated together at their respective division surfaces (67, 84), the right case half (83) having an L-shaped-cross-sectional wall (88) along the division surface (84) thereof, the left case half (66) having a lid portion (72) extending from the division surface (64) into a crank chamber (71) of the crankcase (49), the L-shaped-cross-sectional wall (88) and the lid portion (72) jointly defining the vaporized fuel passageway (52), the vaporized fuel passageway (52) having a lower end located below a predetermined lower limit level (89) of the engine oil and above an inlet (87) of the suction passage (86) provided at a bottom of the crankcase (49),
the vaporized fuel conduit (41) is connected to a branching pipe (53) via a T-shape fitting (126), the branching pipe (53) having a distal end opened to the atmosphere and also having a second check valve (56) for allowing only flow of an outside air into the vaporized fuel conduit (41), and
the vaporized fuel conduit (41), as it extends from the fuel tank (22) to the T-shape fitting (126), runs transversely of the vehicle substantially across a width of the body frame (11) of the vehicle.

2. The vehicle according to claim 1, **characterized by** the fact that the vaporized fuel passageway (52) has a discharge port (105) for discharging the vaporized fuel into the engine oil, the discharge port (105) being disposed proximate a lateral center of the crankcase (49).

3. The vehicle according to claim 1 or 2, **characterized by** the fact that the internal combustion engine (20) is a transverse engine having a crankshaft (51) extending laterally of the vehicle and a cylinder (21) extending forward of the vehicle, the crankcase (49) having a counterweight accommodation portion (104) accommodating counterweights (103) of the crankshaft (51), the vaporized fuel passageway (52) being disposed within a width of the counterweight accommodation portion (104).

4. The vehicle according to claim 3, **characterized by** the fact that the crankcase (49) has a mating surface mating with the cylinder (21), the vaporized fuel passageway (52) includes a first passageway (116) defined in the mating surface of the crankcase (49) and a second passageway (118) extending from the first passageway (116) into the engine oil.

5. The vehicle according to claim 3, **characterized by** the fact that the vaporized fuel passageway (52) extends from above the crankshaft (51) to below the crankshaft (51).

6. The vehicle according to anyone of claims 3 to 4, **characterized by** the fact that the vaporized fuel passageway (52) comprises a joint pipe (107) having one end inserted into a through-hole (109) defined in the crankcase (49) and an opposite end extending into the engine oil, and wherein the vaporized fuel conduit (41) connected to the one end of the joint pipe (107) extends along an outer face of the crankcase (49) and an outer periphery of an AC generator (99) provided at one end of the crankshaft (51).

7. The vehicle according to claim 6, **characterized by** the fact that the crankcase (49) has a drain hole (113) for discharging the engine oil, the drain hole (113) having an axis parallel to an axis of the through-hole (112).

8. The vehicle according to claim 6 or 7, **characterized by** the fact that the joint pipe (107) has a distal end portion defining a plurality of holes (112), the distal end portion having a closed end located ahead of the plurality of the holes (112).

9. The vehicle according to any preceding claim, **characterized by** the fact that the internal combustion engine (20) is a power unit (17) extending rearward of the vehicle, the power unit (17) being vertically swingably attached to the vehicle body frame (11), and wherein the vaporized fuel passageway (52) has a discharge port (105) for discharging the vaporized fuel into the engine oil, the discharge port (105) being disposed rearward of a crankshaft (51) of the power unit (17).

10. The vehicle according to claim 1, **characterized by** the fact that the first check valve (54) is located at a level higher than a predetermined upper limit level (57) of the engine oil collected in the crankcase (49).

## Patentansprüche

1. Fahrzeug, umfassend ein Motorrad (10) oder ein Motordreirad und umfassend einen Karosserierahmen (11), einen Treibstofftank (22), einen Verbrennungsmotor (20), und eine Vorrichtung zum Leiten eines in dem Treibstofftank (22) generierten vaporisierten Treibstoffes in ein Motoröl (48) hinein, das in einem Kurbelgehäuse (49) des Verbrennungsmotors (20) gesammelt ist, wobei das Kurbelgehäuse (49) eine Ölpumpe (102) zum Aufpumpen des Motoröls enthält, wobei das Kurbelgehäuse (49) einen Saugdurchlass (86) zum Leiten des Motoröls zu einer Saugöffnung der Ölpumpe (102) definiert, die Vorrichtung umfassend:
einen Vaporisierter-Treibstoff-Durchgang (52), der in dem Kurbelgehäuse (49) definiert ist; und
eine Vaporisierter-Treibstoff-Leitung (41), die sich von dem Treibstofftank (22) bis zu dem Vaporisierter-Treibstoff-Durchgang (52) erstreckt,
wobei die Vaporisierter-Treibstoff-Leitung (41) ein erstes Rückschlagventil (54) hat, um lediglich den Fluss des vaporisierten Treibstoffs aus dem Treibstofftank (22) in das Kurbelgehäuse (49) hinein zu erlauben,
**dadurch gekennzeichnet, dass** das Kurbelgehäuse (49) eine linke Gehäusehälfte (66) und eine rechte Gehäusehälfte (83) umfasst, die an ihren jeweiligen Teilungsoberflächen (67,84) verbunden sind, wobei die rechte Gehäusehälfte (83) eine Wand L-förmigen Querschnitts (88) entlang der Teilungsoberfläche (84) derselben hat, die linke Gehäusehälfte (66) einen Klappenbereich (72) hat, der sich von der Teilungsoberfläche (64) in eine Kurbelkammer (71) des Kurbelgehäuses (49) hinein erstreckt, die Wand L-förmigen Querschnitts (88) und der Klappenbereich (72) zusammen den Vaporisierter-Treibstoff-Durchgang (52) definieren, der Vaporisierter-Treibstoff-Durchgang (52) ein unteres Ende hat, das unterhalb eines vorgegebenen unteren Grenzstands (89) des Motoröls und oberhalb eines Einlasses (87) des Saugdurchlasses (86), der an einem Boden des Kurbelgehäuses (49) bereitgestellt ist, platziert ist,
die Vaporisierter-Treibstoff-Leitung (41) mit einem Abzweigungsrohr (53) durch ein T-förmiges Anschlussstück (126) verbunden ist, das Abzweigungsrohr (53) ein fernes Ende, das zu der Atmosphäre geöffnet ist, und außerdem ein zweites Rückschlagventil (56) hat, um lediglich den Fluss von Außenluft in die Vaporisierter-Treibstoff-Leitung (41) hinein zu erlauben, und
die Vaporisierter-Treibstoff-Leitung (41), die sich von dem Treibstofftank (22) zu dem T-förmigen Anschlussstück (126) erstreckt, in Transversalrichtung des Fahrzeugs im Wesentlichen quer über eine Breite des Karosserierahmens (11) des Fahrzeugs verläuft.

2. Fahrzeug nach Anspruch 1, **dadurch gekennzeichnet, dass** der Vaporisierter-Treibstoff-Durchgang (52) eine Auslassöffnung (105) zum Auslassen des vaporisierten Treibstoffs in das Motoröl hinein hat, wobei die Auslassöffnung (105) nahe einer seitlichen Mitte des Kurbelgehäuses (49) angeordnet ist.

3. Fahrzeug nach einem der Ansprüche 1 oder 2, **dadurch gekennzeichnet, dass** der Verbrennungsmotor (20) ein Quermotor ist, der eine Kurbelwelle (51), die sich in seitlicher Richtung des Fahrzeugs erstreckt, und einen Zylinder (21) hat, der sich in Vorwärtsrichtung des Fahrzeugs erstreckt, wobei das Kurbelgehäuse (49) einen Gegengewicht-Aufnahmebereich (104) hat, der Gegengewichte (103) der Kurbelwelle (51) aufnimmt, wobei der Vaporisierter-Treibstoff-Durchgang (52) innerhalb einer Breite des Gegengewicht-Aufnahmebereichs (104) angeordnet ist.

4. Fahrzeug nach Anspruch 3, **dadurch gekennzeichnet, dass** das Kurbelgehäuse (49) eine Verbindungsoberfläche hat, die mit dem Zylinder (21) verbunden ist, der Vaporisierter-Treibstoff-Durchgang (52) einen ersten Durchgang (116), der in der Verbindungsoberfläche des Kurbelgehäuses (49) definiert ist, und einen zweiten Durchgang (118) hat, der sich von dem ersten Durchgang (116) in das Motoröl hinein erstreckt.

5. Fahrzeug nach Anspruch 3, **dadurch gekennzeichnet, dass** der Vaporisierter-Treibstoff-Durchgang (52) sich von oberhalb der Kurbelwelle (51) bis unterhalb der Kurbelwelle (51) erstreckt.

6. Fahrzeug nach einem der Ansprüche 3 bis 4, **dadurch gekennzeichnet, dass** der Vaporisierter-Treibstoff-Durchgang (52) eine Verbindungsröhre (107) umfasst, die ein Ende hat, das in ein Durchgangsloch (109), das in dem Kurbelgehäuse (49) definiert ist, eingesetzt ist, und ein gegenüberliegendes Ende, das sich in das Motoröl hinein erstreckt, und wobei die Vaporisierter-Treibstoff-Leitung (41), die mit dem einen Ende der Verbindungsröhre (107) verbunden ist, sich entlang einer äußeren Fläche des Kurbelgehäuses (49) und eines äußeren Umfangs eines Wechselstromgenerators (99), der bei einem Ende der Kurbelwelle (51) bereitgestellt ist, erstreckt.

7. Fahrzeug nach Anspruch 6, **dadurch gekennzeichnet, dass** das Kurbelgehäuse (49) ein Abflussloch (113) zum Auslassen des Motoröls hat, wobei das Abflussloch (113) eine Achse hat, die parallel ist zu einer Achse des Durchgangslochs (112).

8. Fahrzeug nach einem der Ansprüche 6 oder 7, **dadurch gekennzeichnet, dass** die Verbindungsröhre (107) einen distalen Endbereich hat, der eine Mehrzahl von Löchern (112) definiert, wobei der distale Endbereich ein geschlossenes Ende hat, das vor der Mehrzahl von Löchern (112) platziert ist.

9. Fahrzeug nach einem der vorherigen Ansprüche, **dadurch gekennzeichnet, dass** der Verbrennungsmotor (20) eine Leistungseinheit (17) ist, die sich in Rückwärtsrichtung des Fahrzeugs erstreckt, wobei die Leistungseinheit (17) vertikal schwingbar an dem Karosserierahmen (11) befestigt ist, und wobei der Vaporisierter-Treibstoff-Durchgang (52) eine Auslassöffnung (105) zum Auslassen des vaporisierten Treibstoffs in das Motoröl hinein hat, wobei die Auslassöffnung (105) hinter einer Kurbelwelle (51) der Leistungseinheit (17) angeordnet ist.

10. Fahrzeug nach Anspruch 1, **dadurch gekennzeichnet, dass** das erste Rückschlagventil (74) bei einem Niveau platziert ist, das höher ist als ein vorgegebener oberer Grenzstand (57) des Motoröls, das in dem Kurbelgehäuse (49) gesammelt ist.

## Revendications

1. Véhicule comprenant une motocyclette (10) ou d'un tricycle motorisé et comportant un cadre de corps (11), un réservoir de carburant (22), un moteur à combustion interne (20), et un appareil pour guider un carburant sous forme de vapeur générée dans le réservoir de carburant (22) dans une huile moteur (48) collectée dans un carter moteur (49) du moteur à combustion interne (20), le carter moteur (49) logeant une pompe à huile (102) pour pomper l'huile moteur, le carter moteur (49) définissant un passage d'aspiration (86) pour le guidage de l'huile moteur à une ouverture d'aspiration de la pompe à huile (102), l'appareil comprenant :
un passage de carburant sous forme de vapeur (52) défini dans le carter moteur (49) ; et
un conduit de carburant sous forme de vapeur (41) s'étendant du réservoir de carburant (22) au passage de carburant sous forme de vapeur (52),
dans lequel le conduit de carburant sous forme de vapeur (41) a un premier clapet antiretour (54) pour permettre le seul flux du carburant sous forme de vapeur du réservoir de carburant (22) dans le carter moteur (49),
**caractérisé en ce que** le carter moteur (49) comporte une moitié de carter gauche (66) et une moitié de carter droite (83) accouplées ensemble sur leurs surfaces de division respectives (67, 84), la moitié de carter droite (83) présentant une paroi de section transversale en forme de L (88) le long de la surface de division (84) de celui-ci, la moitié de carter gauche (66) présentant une partie de couvercle (72) s'étendant depuis la surface de division (64) dans une chambre de carter (71) du carter moteur (49), la paroi de section transversale en forme de L (88) et la partie de couvercle (72) définissant conjointement le passage de carburant sous forme de vapeur (52), le passage de carburant sous forme de vapeur (52) présentant une extrémité inférieure située sous un niveau limite inférieur prédéterminé (89) de l'huile moteur et au-dessus d'une entrée (87) du passage d'aspiration (86) prévu sur un fond du carter moteur (49),
le conduit de carburant sous forme de vapeur (41) est relié à un tuyau de dérivation (53) par le biais d'un raccord en forme de T (126), le tuyau de dérivation (53) présentant une extrémité distale ouverte à l'atmosphère et présentant aussi un second clapet antiretour (56) pour permettre un seul flux d'un air extérieur dans le conduit de carburant sous forme de vapeur (41) et
le conduit de carburant sous forme de vapeur (41) lorsqu'il s'étend depuis le réservoir de carburant (22) au raccord en forme de T (126), s'étend transversalement du véhicule sensiblement sur une largeur du cadre de corps (11) du véhicule.

2. Véhicule selon la revendication 1, **caractérisé par le fait que** le passage de carburant sous forme de vapeur (52) a un orifice d'évacuation (105) pour évacuer le carburant sous forme de vapeur dans l'huile moteur, l'orifice d'évacuation (105) étant agencé à proximité d'un centre latéral du carter moteur (49).

3. Véhicule selon la revendication 1 ou 2, **caractérisé par le fait que** le moteur à combustion interne (20) est un moteur transversal présentant un vilebrequin (51) s'étendant latéralement du véhicule et un cylindre (21) s'étendant vers l'avant du véhicule, le carter moteur (49) présentant une partie de logement de contrepoids (104) logeant des contrepoids (103) du vilebrequin (51), le passage de carburant sous forme de vapeur (52) étant agencé dans une largeur de la partie de logement de contrepoids (104).

4. Véhicule selon la revendication 3, **caractérisé par le fait que** le carter moteur (49) a une surface d'accouplement s'accouplant avec le cylindre (21), le passage de carburant sous forme de vapeur (52) comporte un premier passage (116) défini dans la surface d'accouplement du carter moteur (49) et un second passage (118) s'étendant du premier passage (116) dans l'huile moteur.

5. Véhicule selon la revendication 3, **caractérisé par le fait que** le passage de carburant sous forme de vapeur (52) s'étend depuis le dessus du vilebrequin (51) jusqu'au dessous du vilebrequin (51).

6. Véhicule selon l'une quelconque des revendications 3 à 4, **caractérisé par le fait que** le passage de carburant sous forme de vapeur (52) comprend un tuyau de joint (107) présentant une extrémité insérée dans un trou débouchant (109) défini dans le carter moteur (49) et une extrémité en regard s'étendant dans l'huile moteur, et dans lequel le conduit de carburant sous forme de vapeur (41) relié à l'une extrémité du tuyau de joint (107) s'étend le long d'une face extérieure du carter moteur (49) et une périphérie extérieure d'un générateur de courant alternatif (99) prévu sur une extrémité du vilebrequin (51).

7. Véhicule selon la revendication 6, **caractérisé par le fait que** le carter moteur (49) a un trou de drainage (113) pour évacuer l'huile moteur, le trou de drainage (113) présentant un axe parallèle à un axe du trou débouchant (112).

8. Véhicule selon la revendication 6 ou 7, **caractérisé par le fait que** le tuyau de joint (107) a une partie d'extrémité distale définissant une pluralité de trous (112), la partie d'extrémité distale présentant une extrémité fermée située devant la pluralité des trous (112).

9. Véhicule selon l'une quelconque des revendications précédentes, **caractérisé par le fait que** le moteur à combustion interne (20) est une unité de puissance (17) s'étendant vers l'arrière du véhicule, l'unité de puissance (17) étant attachée de manière à osciller verticalement au cadre de corps de véhicule (11), et dans lequel le passage de carburant sous forme de vapeur (52) a un orifice d'évacuation (105) pour évacuer le carburant sous forme de vapeur dans l'huile moteur, l'orifice d'évacuation (105) étant agencé à l'arrière d'un vilebrequin (51) de l'unité de puissance (17).

10. Véhicule selon la revendication 1, **caractérisé par le fait que** le premier clapet antiretour (54) est situé sur un niveau plus élevé qu'un niveau limite supérieur prédéterminé (57) de l'huile moteur collectée dans le carter moteur (49).
